# EUROPEAN PATENT APPLICATION

(11) **EP 2 595 093 A2**
(43) Date of publication of application: **22.05.2013**
(21) Application number: 11807013.5
(22) Date of filing: 12.07.2011
(51) Int. Cl.: G06K 17/00

(54) **RFID READER FOR CASINO CHIP TRAYS**

(30) Priority: 12.07.2010 KR 20100067016
(71) Applicant: System Integration Technology Korea Co., Ltd, Incheon 406-840 (KR)
(72) Inventor: LEE, Sung Won, Incheon 406-130 (KR)
(74) Representative: Lippert, Stachow & Partner
(86) International application number: PCT/KR2011/005097
(87) International publication number: WO 2012/008728

(57) **Abstract**

The present invention relates to the RFID reader for use in casinochip tray containing: a casinochip tray where RFID tag-embedded casino chips can be accommodated; a housing of which an upper side is opened in order for the casinochip tray to be located; a RFID antenna line which is arranged on the circumference and on the bottom side of the housing; and a RFID reader which is connected to the RFID antenna line.

## Description

### Technical Field

The present invention relates to an RFID reader for use in a casinochip tray, and more particularly, to an RFID reader for use in a casinochip tray, wherein a casinochip tray for accommodating casino chips with RFID tag-embedded therein, a housing opened at the upper side thereof to allow the casinochip tray to be positioned therein, RFID antenna lines arranged on the circumference and on the bottom side of said housing, and an RFID reader connected with the RFID antenna lines are provided, so that one or both of the number of casino chips accommodated in the casinochip tray and the money information of the RFID tags can be precisely recognized.

### Background Art

Casino chips are used to distinguish values or players in a casino and are generally divided into value chips with values and non-value chips with no values.

Value chips indicate chips which can be cashed. The value chips have values and casino logos presented on the surfaces thereof and can be cashed in at anytime in the casino. In terms of value, although different values may be used from casino to casino, most casinos in Korea use chips with values of one thousand won, five thousand won, ten thousand won, one hundred thousand won, one million won, five million won, ten million won, and so forth.

Non-value chips indicate chips which cannot be cashed. In general, in order to distinguish players in games such as roulette and Tai-Sai, non-value chips with several colors, for example, seven colors are used.

Since casino chips are used as substitutes for cash with high values, it is important to prevent carrying-out, counterfeiting and falsifying of the casino chips. To this end, methods using a hologram, UV ink, a watermark, a magnetic strip, a bar code and RFID (radio frequency identification) have been disclosed in the art. Among these methods, the method using RFID provides advantages over the methods using a magnetic strip and a bar code, in that lifetime is semi-permanent, counterfeiting or falsifying is impossible and administration is efficient.

Therefore, recently, the method using RFID has been widely used. An RFID technology means a technology for recognizing information at a distant place by using radio waves. The RFID technology needs an RFID tag and an RFID reader. The tag is composed of an antenna and an integrated circuit. Information is recorded in the integrated circuit and is transmitted to the reader through the antenna. The information is used to identify an object to which the tag is attached.

In a table game such as baccarat in which casino chips are used as substitutes for cash, a casinochip tray is installed on a game table adjacent to a position where a staff member, who deals a game (hereinafter, referred to as a "dealer"), stands, so that the dealer can easily keep and take out casino chips. Such a casinochip tray usually has a rectangular box-like shape. In the casinochip tray, projections or grooves are formed at regular intervals (for example, each corresponding to the size of casino chips) so that the casino chips can be received in the casinochip tray in a tidy and arranged manner.

In particular, when playing a table game using the casino chips with the RFID tags embedded therein, a dealer keeps the casino chips with the RFID tags embedded therein in the casinochip tray. It is the norm in order to recognize the RFID tags embedded in the casino chips accommodated in the casinochip tray that an RFID antenna line or an RFID detector is installed on the lower surface of the game table or the lower surface of the casinochip tray.

However, in the case of using this method according to the conventional art, a problem is caused in that the RFID antenna line or the RFID detector can recognize only the existence and nonexistence of casino chips in the casinochip tray. Moreover, another problem is caused in that stability and reliability of recognizing the existence and nonexistence of casino chips deteriorate.

Also, if a power level is raised to improve the recognition distance and recognition rate of the casino chips accommodated in the casinochip tray, as the magnetic field created by the RFID antenna line is expanded, interference occurs between casino chips with the RFID tags embedded therein, and it may become difficult to precisely recognize the information stored in the casino chips, whereby stability and reliability may further deteriorate.

Such deterioration of stability and reliability in recognizing casino chips is likely to raise a serious issue in general casino chips with high nominal values. As a consequence, only a one time error may cause customers visiting a casino to lose their trust in a casino management system or a dealer, which may lead to a serious problem in association with general loss in the casino industry.

### Disclosure

### Technical Problem

An embodiment of the present invention is directed to an RFID reader for use in a casinochip tray, wherein a casinochip tray for accommodating casino chips with RFID tags embedded therein, a housing opened at the upper end thereof to allow the casinochip tray to be positioned therein, RFID antenna lines three-dimensionally which are arranged on the circumference and on the bottom side of said housing, and an RFID reader connected with the RFID antenna lines are provided, so that one or both of the number of casino chips accommodated in the casinochip tray and the money information of the RFID tags can be precisely recognized.

Another embodiment of the present invention is directed to an RFID reader for use in a casinochip tray, wherein RFID antenna lines are three-dimensionally installed to have a predetermined form to allow magnetic fields to be induced in the vertical direction, so that interference between the RFID tag of a casino chip laid on a casino chip table and the RFID tag of a casino chip erected in a casinochip tray may be reduced to improve the stability and reliability of casino chip recognition.

Another embodiment of the present invention is directed to an RFID reader for use in a casinochip tray, wherein a shielding sheet is provided between an RFID reader for use in a casinochip tray and another RFID reader for use in another casinochip tray, so that interference between a plurality of RFID readers for use in a plurality of casinochip trays may be prevented, interference between an RFID reader for use in a casinochip tray and an RFID reader positioned in a player area may be prevented and interference between a plurality of game tables may be prevented.

Another embodiment of the present invention is directed to an RFID reader for use in a casinochip tray, wherein RFID tags with a frequency of 20 MHz to 25 MHz are used, so that a plurality of casino chips accommodated in a casinochip tray may be individually recognized.

### Technical Solution

In order to accomplish the above objects, the present invention provides a RFID reader for use in casinochip tray comprising: a casinochip tray where RFID tag-embedded casino chips can be accommodated; a housing of which an upper side is opened in order for said casinochip tray to be located; a RFID antenna line which is arranged on the circumference and on the bottom side of said housing; and a RFID reader which is connected to said RFID antenna line.

Preferably, said RFID reader can read the RFID tag of the casino chip to identify one or both of the amount of said casino chips and the money information of said RFID tag.

Preferably, said RFID antenna line comprises a first RFID antenna line, a second RFID antenna line and connecting antenna lines; said first RFID antenna line comprises: external antenna lines which are located respectively on two sides of said housing which are opposite from each other; and a first side antenna line which connects ends of said external antenna lines on the outside of said housing; said second RFID antenna line comprises: at least two bottom RFID antenna lines which are extended in a row on the bottom of said housing; and a second side antenna line which connects ends of said bottom RFID antenna lines on the outside of said housing; and said connecting antenna lines connect the other ends of said external antenna lines and the other ends of said bottom RFID antenna lines.

Preferably, the number of said bottom RFID antenna lines is four; and said connecting antenna lines comprise: third RFID antenna lines which connect the other ends of said external antenna lines and the other ends of external bottom RFID antenna lines among said four bottom RFID antenna lines; and fourth RFID antenna lines which connect said third RFID antenna lines and the other ends of internal bottom RFID antenna lines among said four bottom RFID antenna lines.

Preferably, wherein a plurality of grooves is located in a row in said casinochip tray, the size of said groove corresponding with that of said casino chips, and said casino chips being accommodated upright on said groove; and the bottom of said plurality of grooves is angled on the basis of the bottom of said housing.

Preferably, said connecting antenna lines are located perpendicularly on the basis of the bottom of said housing.

Preferably, said connecting antenna lines are located to be angled on the basis of the bottom of said housing.

Preferably, said connecting antenna lines are located perpendicularly on the basis of the bottom of said grooves.

Preferably, said third RFID antenna lines are located perpendicularly on the basis of the bottom of said housing and said fourth RFID antenna lines are located horizontally on the basis of the bottom of said housing.

Preferably, said third RFID antenna lines are located to be angled on the basis of the bottom of said housing.

Preferably, said third RFID antenna lines are located perpendicularly on the basis of the bottom of said grooves.

Preferably, said housing further comprises the support member which is extended downwardly from the side of said housing, and a plurality of holes is formed in said support member, the connecting location of said first RFID antenna line and said second RFID antenna line is controlled through said plurality of holes.

Preferably, said RFID reader is connected to the center of said first side antenna line and the center of said second side antenna line respectively.

Preferably, a shielding sheet is provided between said housing and a housing of another RFID reader for use in casinochip tray.

Preferably, said RFID tag comprises: an Integrated Circuit (IC); and an antenna connected to the IC, said RFID tag has a frequency which is equal to or greater than 20MHz and is equal to or less than 25MHz.

Preferably, the RFID reader for use in casinochip tray further comprises: a central server which can receive one or both of the amount of said casino chips and the money information of said RFID tag; and a display part which can display one or both of said amount of said casino chips and said money information of said RFID tag which are received by said central server.

### Advantageous Effects

As is apparent from the above descriptions, according to the embodiments of the present invention, it is possible to provide an RFID reader for use in a casinochip tray, which is capable of more precisely recognizing one or both of the number of casino chips accommodated in a casinochip tray and the money information of RFID tags.

Furthermore, as RFID antenna lines are installed in such a three-dimensional manner as to have a predetermined form, magnetic fields are formed in the vertical direction. Accordingly, interference between the RFID tag of a casino chip laid on a casino chip table and the RFID tag of a casino chip erected in the casinochip tray may be reduced to improve the stability and reliability of casino chip recognition.

Furthermore, as a shielding sheet is provided between an RFID reader for use in a casinochip tray and another RFID reader for use in another casinochip tray, interference between the respective RFID readers for use in the casinochip trays may be prevented, and interference between an RFID reader for use in a casinochip tray and an RFID reader positioned in a player area may be prevented. Furthermore, interference between RFID readers for use in casinochip trays which are positioned in different tables may be prevented.

Furthermore, as RFID tags with a frequency of 20 MHz to 25 MHz are used, a plurality of casino chips accommodated in a casinochip tray may be individually recognized.

While the present invention has been described with respect to the specific embodiments, it will be apparent to those skilled in the art that various changes and modifications may be made without departing from the spirit and scope of the invention as defined in the following claims.

### Description of Drawings

FIG. 1 is a schematic perspective view illustrating an RFID reader 100 for use in a casinochip tray in accordance with an example of the present invention.
FIG. 2 is a left-side cross-sectional view of the RFID reader 100 for use in a casinochip tray according to the example of the present invention.
FIG. 3 is a right-side cross-sectional view of a first example of the RFID reader 100 for use in a casinochip tray according to the example of the present invention.
FIG. 4 is a right-side cross-sectional view of a second example of the RFID reader 100 for use in a casinochip tray according to the example of the present invention.
FIG. 5 is a right-side cross-sectional view of a third example of the RFID reader 100 for use in a casinochip tray according to the example of the present invention.
FIG. 6 is a schematic perspective view of an RFID reader 100' for use in a casinochip tray in accordance with other example of the present invention.
FIG. 7 is a right-side cross-sectional view of a first embodiment of the RFID reader 100' for use in a casinochip tray according to other example of the present invention.
FIG. 8 is a right-side cross-sectional view of a second embodiment of the RFID reader 100' for use in a casinochip tray according to other example of the present invention.
FIG. 9 is a right-side cross-sectional view of a third embodiment of the RFID reader 100' for use in a casinochip tray according to other example of the present invention.
FIG. 10 is a view schematically illustrating a state in which the RFID reader 100 for use in a casinochip tray according to the example of the present invention is connected with a central server, a display part, and a control part.

### Description of Specific Embodiments

Hereinafter, the RFID reader for use in a casinochip tray according to examples of the present invention will be described with reference to the accompanying drawings. In the drawings, the thicknesses of lines or the sizes of components may be exaggerated for the sake of convenience in description. Furthermore, terms used in the following descriptions have been defined by considering functions in the present invention, and may be changed according to a user or operator's intention or practice. Therefore, the definition of such terms should be given on the basis of the entire descriptions of the present specification.

### <Example 1>

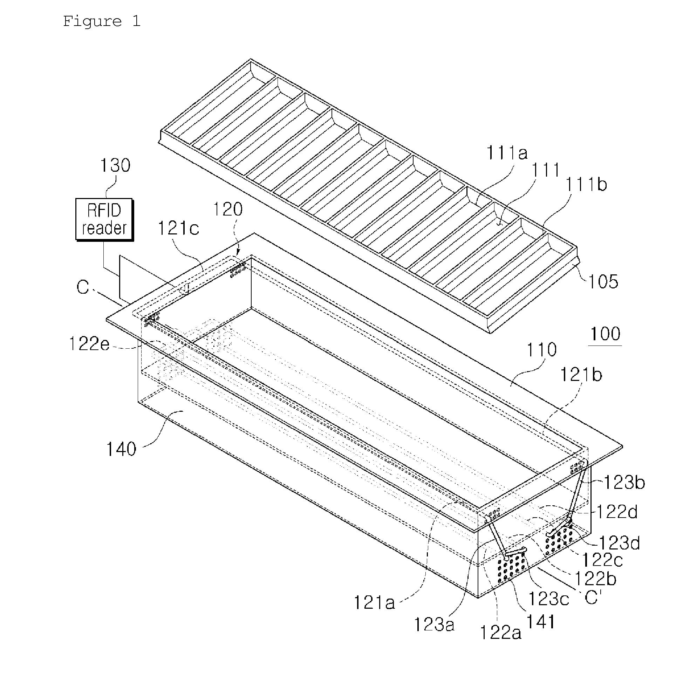

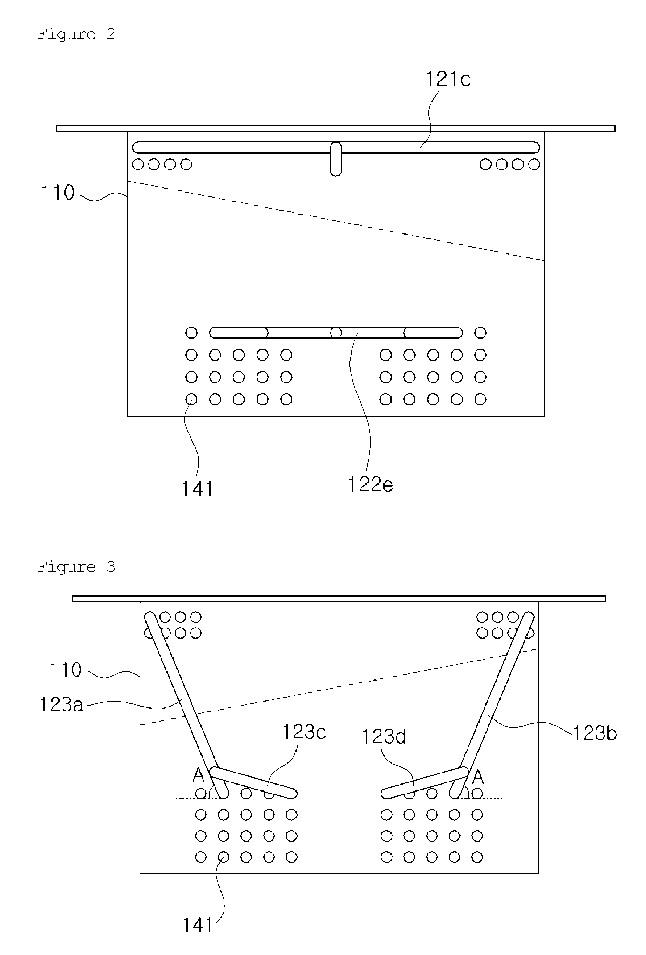

FIG. 1 is a schematic perspective view illustrating an RFID reader 100 for use in a casinochip tray in accordance with an example of the present invention, FIG. 2 is a left-side cross-sectional view of the RFID reader 100 for use in a casinochip tray according to the example of the present invention, and FIG. 3 is a right-side cross-sectional view of the RFID reader 100 for use in a casinochip tray according to the example of the present invention.

Referring to FIGS. 1 to 3, the RFID reader 100 for use in a casinochip tray according to the example of the present invention includes a casinochip tray 105, a housing 110, a plurality of RFID antenna lines 120, and an RFID reader 130.

The casinochip tray 105 is constructed in such a manner as to accommodate casino chips having RFID tags embedded therein. Specifically, the casinochip tray 105 has a plurality of grooves 111 corresponding to the size of the casino chips and defined in a low, such that the casino chips may be accommodated upright in the grooves 111. Each of the grooves 111 includes a bottom surface 111a and a plurality of projections 111b. As the plurality of projections 111b are arranged in a low so as to be spaced a predetermined distance from one another, the plurality of grooves 111 in which the casino chips may be accommodated upright are defined.

The casinochip tray 105 according to the example of the present invention may be constructed in such a manner that twelve grooves 111 are defined horizontally in a low and about fifty casino chips are accommodated upright in each of the grooves 111. However, the casinochip tray 105 is not limited to this construction.

The casinochip tray 105 may be detachably positioned in the upper part of the housing 110 as will be described below. In this case, the bottom surface 111a of each groove 111 is inclined in a predetermined direction on the basis of the bottom surface of the housing 110.

The housing 110 is formed in a rectangular box shape of which the upper part is opened, such that the casinochip tray 105 may be detachably positioned in the upper part of the housing 110. While the housing 110 is formed in a rectangular box shape in the example of the present invention, it is to be noted that the shape of the housing 110 is not limited to such shape and housings with various shapes may be used.

The housing 110 is generally positioned in front of a dealer side of a game table. Through the construction of the housing 110 and the casinochip tray 105, a dealer may easily keep a plurality of casino chips in the casinochip tray 105 and easily take the kept casino chips out of the casinochip tray 105.

In the example of the present invention, it has been described that only one casinochip tray 105 is positioned in the upper part of the housing 110. However, two or more casinochip trays may be stacked in the upper part of the housing 110.

The plurality of RFID antenna lines 120 are three-dimensionally arranged on the circumference and on the bottom side of the housing 110. The RFID reader 130 is connected to the RFID antenna lines 120. A space, in which the RFID reader 130 is to be disposed, is not specifically limited, and the RFID reader 130 may be disposed at any position of the casino table in conformity with a user's desire. Furthermore, an antenna board (not shown) for effectively connecting the plurality of RFID antenna lines 120 may be additionally provided between the RFID antenna lines 120 and the RFID reader 130.

Due to such a construction, the RFID reader 100 for use in a casinochip tray according to the example of the present invention may precisely read the RFID tags of casino chips accommodated in the casinochip tray 105 through the RFID antenna lines 120, which are three-dimensionally arranged, and the RFID reader 130, which is connected with the RFID antenna lines 120. Accordingly, it is possible to precisely identify one or both of the number of casino chips and the money information of the RFID tags.

That is, the RFID tags embedded in the casino chips may perform communication with the RFID antenna lines 120 and transmit information stored therein to the RFID antenna lines 120, and the RFID reader 130 may read or update the information stored in the RFID tags.

In particular, the integrated circuit of each RFID tag may store information of a corresponding casino chip, for example, a unique ID number and money information of the corresponding casino chip, and the antenna of the RFID tag may transmit the information stored in the integrated circuit to the RFID antenna lines 120 and receive a specified signal from the RFID antenna lines 120.

In the example of the present invention, each RFID antenna line 120 may include an electric wire generally used as an antenna. However, the RFID antenna line 120 is not limited to such. For example, it is to be noted that the RFID antenna line 120 may be designed as an antenna pattern of a printed circuit board. In this case, a plurality of printed circuit boards may be positioned on the circumference and on the bottom side of the housing 110, and the antenna patterns designed on the plurality of printed circuit boards may have the three-dimensional arrangement which has been described above or which will be described below. Furthermore, the RFID antenna line 120 may be formed of a thin copper plate; a copper plate to which a metal such as gold, platinum or silver is added to form an alloy; or a copper plate plated with a metal such as gold, platinum or silver. In this case, the copper plates may be positioned in the antenna on the circumference and on the bottom side of the housing 110, thereby having a three-dimensional arrangement which will be described below.

Hereinafter, the construction of the RFID antenna lines 120 will be described in detail.

The RFID antenna lines 120 include a first RFID antenna line 121, a second RFID antenna line 122, and a connecting antenna line 123.

The first RFID antenna line 121 includes two external antenna lines 121a and 121b and one first side antenna line 121c. The two external antenna lines 121a and 121b are positioned on two facing surfaces of the housing 110, that is, the front and rear surfaces of the RFID reader 100 for use in a casinochip tray which is illustrated in FIG. 1. The first side antenna line 121c is positioned to connect the one ends of the two external antenna lines 121a and 121b on an outer surface of the housing 110, that is, a left-side surface of the RFID reader 100 for use in a casinochip tray which is illustrated in FIG. 1.

That is, when viewed from the top of the housing 110, the first RFID antenna line 121 is arranged in a U shape such as to surround the housing 110. At this time, the first RFID antenna line 121 may be positioned on the upper part of the circumference of the housing 110.

While the external antenna lines 121a and 121b and the first side antenna line 121c of the first RFID antenna line 121 have been designated as separate components for the sake of convenience in description, it is to be noted that the first RFID antenna line 121 is formed integrally.

The second RFID antenna line 122 includes four bottom RFID antenna lines 122a to 122d and one second side antenna line 122e. The four bottom RFID antenna lines 122a to 122d are extended parallel to one another on the outer bottom surface of the housing 110. The second side antenna line 122e is positioned to connect the one ends of the four bottom RFID antenna lines 122a to 122d on the outer surface of the housing 110, that is, the left-side surface of the RFID reader 100 for use in a casinochip tray which is illustrated in FIG. 1.

At this time, the four bottom RFID antenna lines 122a to 122d may be spaced a predetermined distance from the bottom side of the housing 110 or may be positioned adjacent to the bottom side of the housing 110.

While the bottom RFID antenna lines 122a to 122d and the second side antenna line 122e of the second RFID antenna line 122 have been designated as separate components for the sake of convenience in description, it is to be noted that the second RFID antenna line 122 is formed integrally.

Preferably, the RFID reader 130 is connected to the centers of the first side antenna line 121c and the second side antenna line 122e. However, the present invention is not limited thereto.

The connecting antenna line 123 is disposed to connect the other ends of the external antenna lines 121a and 121b with the other ends of the bottom RFID antenna lines 122a to 122d, on the outer surface of the housing 110 (that is, the right-side surface of the RFID reader 100 for use in a casinochip tray which is illustrated in FIG. 1).

Speaking in detail, the connecting antenna line 123 includes a pair of third RFID antenna lines 123a and 123b and a pair of fourth RFID antenna lines 123c and 123d.

The third RFID antenna line 123a connects the other end of the external antenna line 121a with the other end of the bottom RFID antenna line 122a positioned outside among the bottom RFID antenna lines, and the third RFID antenna line 123b connects the other end of the external antenna line 121b with the other end of the bottom RFID antenna line 122d positioned outside among the bottom RFID antenna lines (wherein "positioned outside" means that the corresponding bottom RFID antenna line is positioned farthest from the center line C-C' of the rectangle when the RFID reader 100 for use in a casinochip tray illustrated in FIG. 1 is viewed from the bottom) .

The fourth RFID antenna line 123c connects the third external antenna line 123a with the other end of the bottom RFID antenna line 122b positioned inside among the bottom RFID antenna lines, and the fourth RFID antenna line 123d connects the third external antenna line 123b with the other end of the bottom RFID antenna line 122c positioned inside among the bottom RFID antenna lines, wherein "positioned inside" means that the corresponding bottom RFID antenna line is positioned nearest to the center line C-C' of the rectangle when the RFID reader 100 for use in a casinochip tray illustrated in FIG. 1 is viewed from the bottom).

Various three-dimensional arrangements of the RFID antenna lines 120, which are positioned on the circumference and on the bottom side of the housing 110, are possible according to the connecting positions and angles of the third RFID antenna lines 123a and 123b and the fourth RFID antenna lines 123c and 123d. Hereinafter, three examples of the three-dimensional arrangements of the RFID antenna lines 120 will be described in detail with reference to FIGS. 3 to 5.

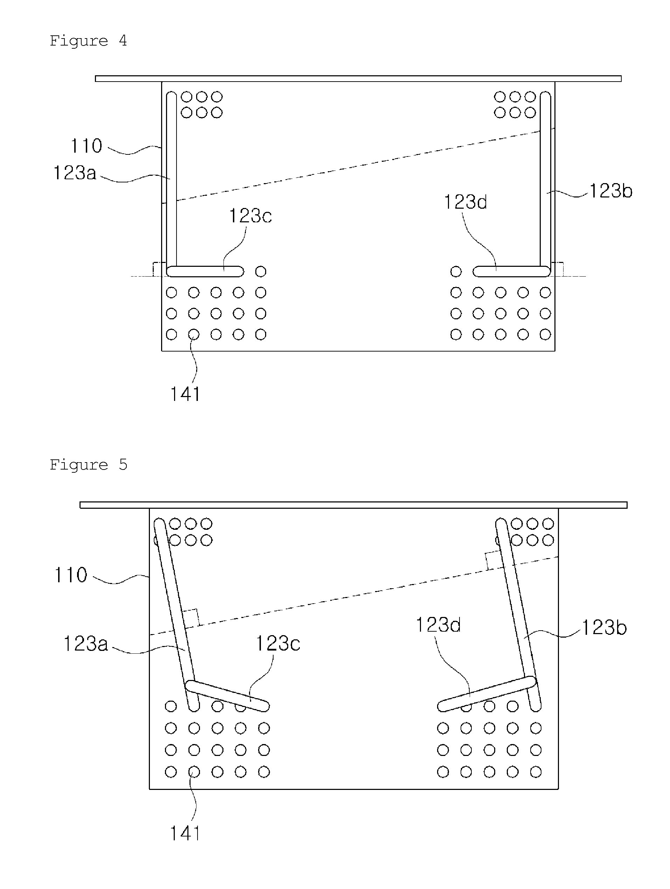

FIG. 3 is a right-side cross-sectional view of a first example of the RFID reader 100 for use in a casinochip tray according to the example of the present invention, FIG. 4 is a right-side cross-sectional view of a second example of the RFID reader 100 for use in a casinochip tray according to the example of the present invention, and FIG. 5 is a right-side cross-sectional view of a third example of the RFID reader 100 for use in a casinochip tray according to the example of the present invention.

Referring to FIG. 3, each of the third RFID antenna lines 123a and 123b may have a predetermined angle (A in FIG. 3) on the basis of the bottom surface of the housing 110. At this time, the third RFID antenna lines 123a and 123b are disposed symmetrically to each other about the center line C-C'. In this case, the bottom RFID antenna lines 122a and 122d connected to the third RFID antenna lines 123a and 123b are positioned inside when compared to the external antenna lines 121a and 121b. It is to be noted that connections between the fourth RFID antenna lines 123c and 123d and the third RFID antenna lines 123a and 123b are not limited to specific positions.

Referring to FIG. 4, each of the third RFID antenna lines 123a and 123b may be positioned perpendicular to the bottom surface of the housing 110, and each of the fourth RFID antenna lines 123c and 123d may be positioned parallel to the bottom surface of the housing 110. In this case, the bottom RFID antenna lines 122a and 122d connected to the third RFID antenna lines 123a and 123b are positioned directly below the external antenna lines 121a and 121b. At this time, the fourth RFID antenna lines 123c and 123d are connected to the ends of the third RFID antenna lines 123a and 123b so as to be positioned parallel to the bottom surface of the housing 110, respectively.

Referring to FIG. 5, each of the third RFID antenna lines 123a and 123b may be positioned perpendicular to the bottom surfaces 111a of the grooves 111. In this case, while the bottom RFID antenna line 122a connected to the third RFID antenna line 123a is positioned inside when compared to the external antenna line 121a, the bottom RFID antenna line 122d connected to the third RFID antenna line 123b is positioned outside when compared to the external antenna line 121b. It is to be noted that connections between the fourth RFID antenna lines 123c and 123d and the third RFID antenna lines 123a and 123b are not limited to specific positions.

With such configurations, since the magnetic fields of the RFID antenna lines 120 are created in the vertical direction, the RFID reader 130 does not recognize the RFID tags of the casino chips laid on a casino chip table, and interference between the RFID tags of the casino chips laid on the casino chip table and the RFID tags of the casino chips erected in the RFID reader for use in a casinochip tray is reduced, resulting in the improvement of the stability and reliability of casino chip recognition.

In the above-mentioned three examples, the stability and reliability of recognizing the casino chip accommodated in the casinochip tray are most improved in the order of the case of FIG. 5, the case of FIG. 3 and the case of FIG. 4. This is because interference between RFID tags of a plurality of casino chips accommodated in the casinochip tray is reduced through the three-dimensional arrangements of the RFID antenna lines 120 in consideration of the directionality of the magnetic fields of the RFID antenna lines 120.

The RFID reader 100 for use in a casinochip tray according to the example of the present invention may further include a support member 140 extending downward from all sides of the housing 110. In general, the support member 140 is integrally formed with the housing 110. In this regard, it is to be noted that, for the sake of convenience in explanation, the support member 140 is described as a separate component.

A plurality of holes 141 are defined through the sides of the support member 140 and/or the housing 110. Through the plurality of holes 141, it is possible to adjust connecting positions and angles of the first RFID antenna line 121, the second RFID antenna line 122 and the third RFID antenna lines 123a and 123b, and connecting positions and angles between the third RFID antenna lines 123a and 123b and the fourth RFID antenna lines 123c and 123d.

The support member 140 and the plurality of holes 141 are exemplified only for the purpose of connecting respective antennas with one another, and the present invention is not limited thereto. It is to be noted that the above-mentioned RFID antenna lines 120 may be three-dimensionally arranged using various ways generally known in the art.

The casino chips used in the example of the present invention include RFID tags, and each RFID tag includes an integrated circuit and an antenna connected with the integrated circuit. The RFID tag may store information of a casino chip, for example, a unique ID number, money information, and the like, of the casino chip.

The integrated circuit is a composite electronic element or system in which a number of electronic circuit elements are combined on a substrate or with the substrate in an inseparable state, and actually stores various pieces of information of the casino chip.

The antenna is connected with the integrated circuit, and is formed of a winding wound around the integrated circuit a multitude of times. The antenna may receive an electric wave from a reader, activate the integrated circuit, transmit the information stored in the integrated circuit, and receive updated information from an outside source.

The RFID tag may use various frequency bands such as a low frequency band of 120 to 140 KHz, a high frequency band of 13.56 MHz, an ultra high frequency band of 868 to 956 KHz, and a microwave band of 2.45 GHz. Preferably, the RFID tag may have a frequency band of 20 to 25 MHz in order to improve reliability and stability.

Preferably, a shielding sheet (not shown) for shielding an electric wave is provided between the RFID reader 100 for use in a casinochip tray and another RFID reader for use in another casinochip tray. As the shielding sheet, various types of shielding sheets may be used, such as a sheet coated with ferrite constituent or a sheet containing ferrite constituent. Through the shielding sheet, it is possible to prevent interference between a plurality of RFID readers for use in a plurality of casinochip trays, interference between an RFID reader for use in a casinochip tray and an RFID reader positioned in a player area, and interference between a plurality of game tables. The position of arrangement of the shielding sheet is not particularly limited. It is more preferred that a shielding sheet be provided in such a way as to surround the RFID reader 100 itself for use in a casinochip tray.

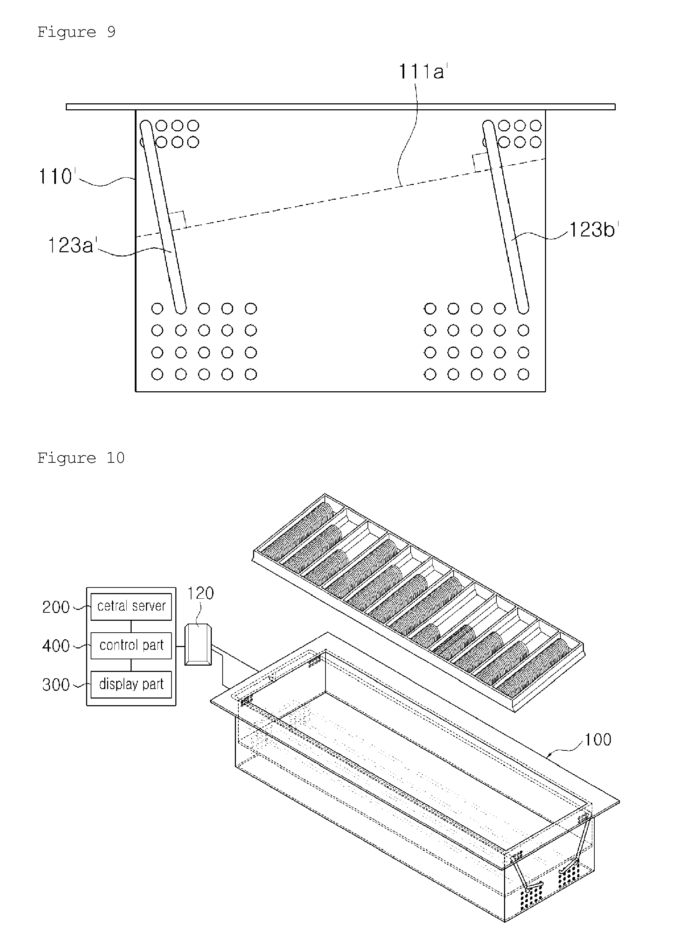

The RFID reader 100 for use in a casinochip tray according to the example of the present invention may further include a central server 200, a display part 300, and a control part 400. FIG. 10 is a diagram schematically illustrating a state in which the RFID reader 100 for use in a casinochip tray according to the example of the present invention is connected with a central server, a display part, and a control part.

The central server 200 functions to receive and map any one of the number and money information of casino chips, which are read by the RFID reader 130. For example, the central server 200 may map the number of casino chips accommodated in a casinochip tray according to the money information of the casino chips. It should be noted that the kind of mapping performed by the central server 200 is not particularly limited.

The display part 300 functions to display the number of casino chips accommodated in a casinochip tray and the money information of RFID tags, which are read by the RFID reader 130. Due to this fact, the display part 300 allows a game dealer to recognize the number of casino chips accommodated in a casinochip tray and the money information of the RFID tags from an outside source. Since the configuration of the display part 300 is generally known in the art, detailed description thereof will be omitted herein.

The control part 400 functions to control the display part 300 as well as the central server 200. In detail, the number of casino chips accommodated in a casinochip tray and the money information of RFID tags, which are read by the RFID reader 130, are inputted to the central server 200, and the control part 400 controls the display part 300 to display corresponding information of the number of casino chips or money information on a screen based on a mapping table acquired from the central server 200.

The control part 400 may include elements such as a microprocessor, a program memory, and a RAM memory backed up by a battery, and may perform a displaying function for the casino chips accommodated in the casinochip tray, in real time. Since the elements of the control part 400 are generally known in the art, detailed description thereof will be omitted herein.

### <Example 2>

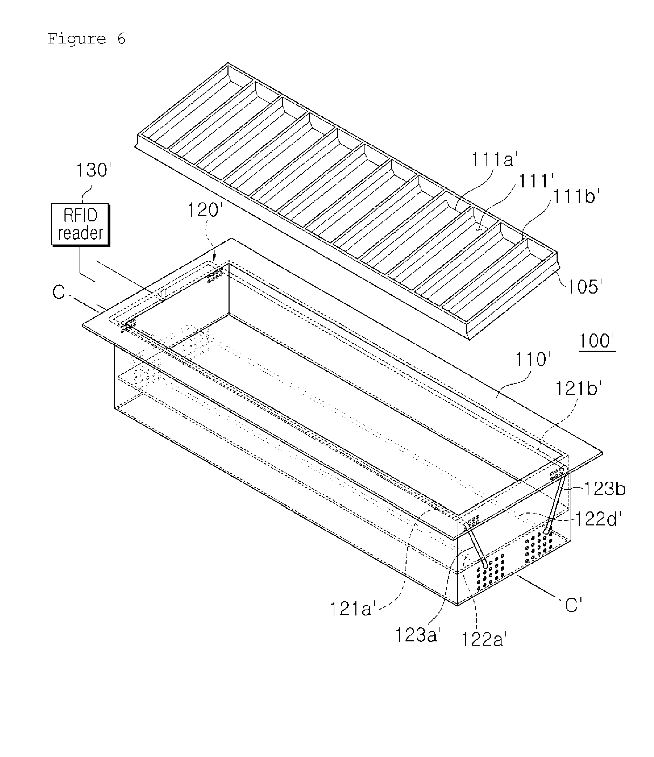

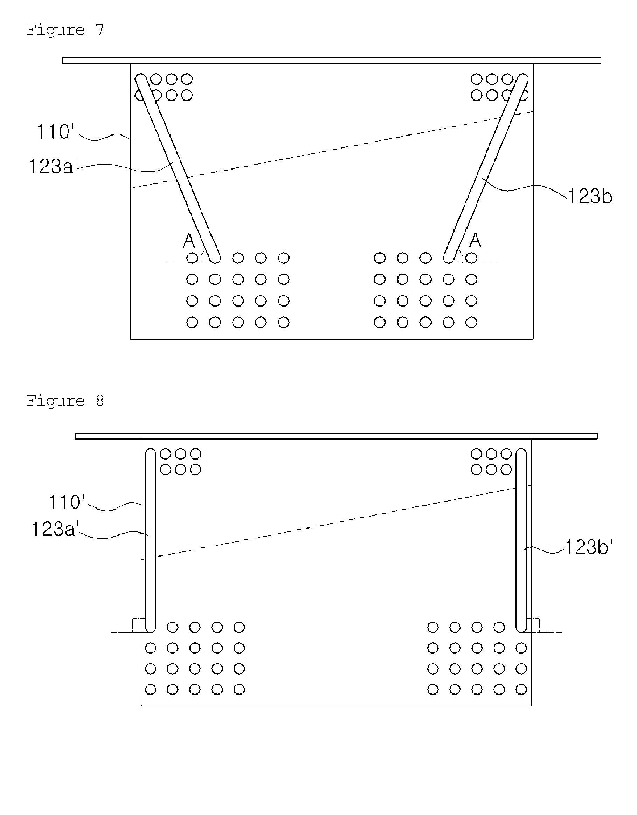

FIG. 6 is a schematic perspective view of the RFID reader 100' for use in casinochip tray according to another example, FIG. 7 is a right-side view of the RFID reader 100' for use in casinochip tray of the first embodiment according to another example, FIG. 8 is a right-side view of the RFID reader 100' for use in casinochip tray of the second embodiment according to another example, and FIG. 9 is a right-side view of the RFID reader 100' for use in casinochip tray of the third embodiment according to another example.

With reference to FIG. 6 to FIG. 9, the RFID reader 100' for use in casinochip tray according to another example comprises a casinochip tray 105', a housing 110', a RFID antenna line 120' and a RFID reader 130'.

Compared with the RFID reader 100 for use in casinochip tray which is shown in FIG. 1 to FIG. 5, the components of the RFID reader 100' for use in casinochip tray according to another example are identical to that of the RFID reader 100 with the exception that the second RFID antenna line 122' comprises two bottom RFID antenna lines not four bottom RFID antenna lines, therefore the explanation about identical components will be omitted.

Two bottom RFID antenna lines 122a' and 122d' are extended in a row on the external bottom side of the housing 110'. Preferably, the positioning of the two bottom RFID antenna lines 122a' and 122d' are distanced from or close to the bottom side of the housing 110'.

Connecting antenna lines 123a' and 123b' are located to connect the other ends of external antenna lines 121a' and 121b' and the other ends of bottom RFID antenna lines 122a' and 122d' on the external side of the housing 110' (that is, the right- side surface of the RFID reader 100' for use in casinochip tray which is illustrated in FIG. 6).

In this case, depending on the connecting location and angle of the connecting antenna lines 123a' and 123b', various three-dimensional arrangements of RFID antenna line 120' located on the circumference and on the bottom side of the housing 110' are possible, and the detailed description about three embodiments of three-dimensional arrangements of RFID antenna line 120' are described below with reference to FIG. 7 to FIG. 9.

As shown in FIG. 7, connecting antenna lines 123a' and 123b' each may have a predetermined angle (A in FIG. 7) on the basis of the bottom of housing 110'. In this case, connecting antenna lines 123a' and 123b' may be located to be symmetric with respect to the center line C-C'. In this case, bottom RFID antenna lines 122a' and 122d', which are connected to connecting antenna lines 123a' and 123b', are located more to the internal side than external antenna lines 121a' and 121b'.

Furthermore, as shown in FIG. 8, connecting antenna lines 123a' and 123b' each may be located to be perpendicular on the basis of the bottom of housing 110'. In this case, connecting antenna lines 123a' and 123b' may be located to be symmetric with respect to the center line C-C'. In this case, bottom RFID antenna lines 122a' and 122d', connected to connecting antenna lines 123a' and 123b', are located perpendicularly below external antenna lines 121a' and 121b'.

Furthermore, as shown in FIG. 9, connecting antenna lines 123a' and 123b' each may be located to be perpendicular to the basis of the bottom 111a' groove. In this case, connecting antenna lines 123a' and 123b' are located to be horizontal to the plane which is perpendicular to the bottom 111a' groove.

The RFID reader 100' for use in casinochip tray according to the second example may comprise other components of the RFID reader 100 for use in casinochip tray according to the first example and the explanation about said components are omitted, as persons of ordinary skill in the art can understand from the description of the invention.

Although the preferred embodiments of the present invention have been disclosed, the present invention is not limited to those embodiments, and various changes and modifications by those skilled in the art should be interpreted as being included in the scope of the present invention.

## Claims

1. A RFID reader for use in casinochip tray comprising:
a casinochip tray where RFID tag-embedded casino chips can be accommodated;
a housing of which an upper side is opened in order for said casinochip tray to be located;
a RFID antenna line which is arranged on the circumference and on the bottom side of said housing; and
a RFID reader which is connected to said RFID antenna line.

2. The RFID reader for use in casinochip tray according to claim 1, wherein said RFID reader can read the RFID tag of the casino chip to identify one or both of the amount of said casino chips and the money information of said RFID tag.

3. The RFID reader for use in casinochip tray according to claim 1, wherein said RFID antenna line comprises a first RFID antenna line, a second RFID antenna line and connecting antenna lines;
said first RFID antenna line comprises: external antenna lines which are located respectively on two sides of said housing which are opposite from each other; and a first side antenna line which connects ends of said external antenna lines on the outside of said housing;
said second RFID antenna line comprises: at least two bottom RFID antenna lines which are extended in a row on the bottom of said housing; and a second side antenna line which connects ends of said bottom RFID antenna lines on the outside of said housing; and
said connecting antenna lines connect the other ends of said external antenna lines and the other ends of said bottom RFID antenna lines.

4. The RFID reader for use in casinochip tray according to claim 3, wherein the number of said bottom RFID antenna lines is four; and
said connecting antenna lines comprise: third RFID antenna lines which connect the other ends of said external antenna lines and the other ends of external bottom RFID antenna lines among said four bottom RFID antenna lines; and fourth RFID antenna lines which connect said third RFID antenna lines and the other ends of internal bottom RFID antenna lines among said four bottom RFID antenna lines.

5. The RFID reader for use in casinochip tray according to claims 3 or 4, wherein a plurality of grooves is located in a row in said casinochip tray, the size of said groove corresponding with that of said casino chips, and said casino chips being accommodated upright on said groove; and
the bottom of said plurality of grooves is angled on the basis of the bottom of said housing.

6. The RFID reader for use in casinochip tray according to claim 3, wherein said connecting antenna lines are located perpendicularly on the basis of the bottom of said housing.

7. The RFID reader for use in casinochip tray according to claim 3, wherein said connecting antenna lines are located to be angled on the basis of the bottom of said housing.

8. The RFID reader for use in casinochip tray according to claim 5, wherein said connecting antenna lines are located perpendicularly on the basis of the bottom of said grooves.

9. The RFID reader for use in casinochip tray according to claim 4, wherein said third RFID antenna lines are located perpendicularly on the basis of the bottom of said housing and said fourth RFID antenna lines are located horizontally on the basis of the bottom of said housing.

10. The RFID reader for use in casinochip tray according to claim 4, wherein said third RFID antenna lines are located to be angled on the basis of the bottom of said housing.

11. The RFID reader for use in casinochip tray according to claim 5, wherein said third RFID antenna lines are located perpendicularly on the basis of the bottom of said grooves.

12. The RFID reader for use in casinochip tray according to claim 2, wherein said housing further comprises the support member which is extended downwardly from the side of said housing, and
a plurality of holes is formed in said support member, the connecting location of said first RFID antenna line and said second RFID antenna line is controlled through said plurality of holes.

13. The RFID reader for use in casinochip tray according to claim 2, wherein said RFID reader is connected to the center of said first side antenna line and the center of said second side antenna line respectively.

14. The RFID reader for use in casinochip tray according to claim 1, wherein a shielding sheet is provided between said housing and a housing of another RFID reader for use in casinochip tray.

15. The RFID reader for use in casinochip tray according to claim 1, wherein said RFID tag comprises:
an Integrated Circuit (IC); and
an antenna connected to the IC,
said RFID tag has a frequency which is equal to or greater than 20MHz and is equal to or less than 25MHz.

16. The RFID reader for use in casinochip tray according to claim 1, further comprises:
a central server which can receive one or both of the amount of said casino chips and the money information of said RFID tag; and
a display part which can display one or both of said amount of said casino chips and said money information of said RFID tag which are received by said central server.
